**Europäisches Patentamt**

**European Patent Office**

**Office européen des brevets**

(19)

(11) Numéro de publication: **0 064 431**
**B1**

(12) # FASCICULE DE BREVET EUROPEEN

(45) Date de publication du fascicule du brevet:
**16.01.85**

(51) Int. Cl.⁴: **H 04 N 5/38**

(21) Numéro de dépôt: **82400614.2**

(22) Date de dépôt: **02.04.82**

(54) **Dispositif de correction de non-linéarité vidéofréquence à efficacité sélective.**

(30) Priorité: **14.04.81 FR 8107459**

(43) Date de publication de la demande:
**10.11.82 Bulletin 82/45**

(45) Mention de la délivrance du brevet:
**16.01.85 Bulletin 85/3**

(84) Etats contractants désignés:
**AT BE CH DE GB LI NL SE**

(56) Documents cités:
**FR - A - 2 301 133**

**TELECOMMUNICATIONS AND RADIO ENGINEERING,
volume 29/30, no. 11, novembre 1975 WASHINGTON
(US) V.I. SHCHURSKIY "Correction of differential-phase
distortion in TV transmitters", pages 12 à 19**

(73) Titulaire: **THOMSON-LGT LABORATOIRE GENERAL
DES TELECOMMUNICATIONS, 51, boulevard de la
République, F-78400 Chatou (FR)**

(72) Inventeur: **Cluniat, Claude, THOMSON-CSF
SCPI 173, bld Haussmann, F-75360 Paris Cedex 08 (FR)**
Inventeur: **Delattre, Joseph, THOMSON-CSF
SCPI 173, bld Haussmann, F-75360 Paris Cedex 08 (FR)**

(74) Mandataire: **Turlèque, Clotilde et al, THOMSON-CSF
SCPI 173, Bld Haussmann, F-75379 Paris Cedex 08 (FR)**

# Description

L'invention se rapporte à la correction de non-linéarité d'amplitude dans un émetteur de télévision, et plus particulièrement à un dispositif de correction de non-linéarité vidéofréquence à efficacité sélective.

Le dispositif de correction d'amplitude selon l'invention a pour but de corriger les non-linéarités basse fréquence introduites dans les étages de puissance d'un émetteur de télévision.

Le principe d'une telle correction est d'introduire sur le signal vidéofréquence avant modulation en fréquence intermédiaire, une prédistorsion, dans la partie basse du spectre à vidéofréquence, complémentaire de celle qui est générée dans les étages de puissance haute fréquence.

Pour réaliser cette précorrection, on connaît des dispositifs qui établissent la caractéristique amplitude/amplitude inverse de celle de l'étage de sortie au moyen d'un circuit correcteur à seuil, la correction étant effectuée au moyen de six à huit paramètres de réglage pour que la définition de la caractéristique de précorrection soit suffisante: trois à quatre seuils d'action sont par exemple fixés, associés à trois ou quatre pentes correspondant à l'efficacité de la correction introduite au point de seuil. Ce circuit précorrecteur est inséré avant modulation en fréquence intermédiaire dans la chaîne de traitement du signal vidéo, en un point où l'amplitude de ce signal est bien définie, c'est-à-dire après alignement et commande automatique de gain.

Cette solution présente des inconvénients: les réglages des seuils de correction et des pentes entre deux seuils de correction interfèrent. De plus, l'efficacité de la correction est constante quelle que soit la fréquence de la bande latérale de modulation, alors que, du fait que la modulation image a lieu en bande latérale atténuée, une distorsion dans la zone double bande est double d'une distorsion analogue dans la bande simple.

D'autres circuits de correction peuvent être prévus dans un système de télévision pour précorriger les distorsions de façon que le signal issu des étages haute fréquence ait une linéarité convenable. Ces systèmes peuvent être par exemple des précorrecteurs à seuil agissant en fréquence intermédiaire (utilisés en particulier lorsque le signal à fréquence vidéo n'est pas disponible, par exemple dans les réémetteurs de télévision), des correcteurs de gain différentiel utilisant un générateur de non-linéarité d'ordre 3, ou des circuits de correction par prémodulation.

Comme le circuit de correction à seuil décrit ci-dessus, aucun de ces circuits de correction n'est sélectif en fréquence et il n'est donc pas possible de modeler séparément les caractéristiques amplitude/amplitude en basse fréquence et à la fréquence de la sous-porteuse de chrominance, et donc de précorriger convenablement le signal transmis. De plus, un dispositif de correction du type utilisant un générateur de non-linéarité d'ordre 3 ne permet qu'une correction d'amplitude progressive: expansion du blanc au noir pour la modulation négative ou expansion du noir au blanc pour la modulation positive.

Or, pour la transmission du signal image de télévision, un système de transmission en modulation d'amplitude du type décrit dans la demande de brevet au nom du titulaire FR-A N° 2437117 (N° 78-27255), réalise l'amplification au moyen d'un dispositif à deux voies parallèles, l'une pour l'amplification d'un signal à porteuse réduite avec un amplificateur polarisé en classe AB, et l'autre pour l'amplification d'un signal porteur pur avec un amplificateur classe C, les signaux obtenus étant combinés pour obtenir le signal amplifié à transmettre. L'amplificateur classe AB introduit une distorsion pour les faibles niveaux du fait de la non-linéarité de sa caractéristique de transfert, son gain étant plus fort pour les faibles niveaux. Ces faibles niveaux de la porteuse modulée en modulation croisée, à porteuse réduite, correspondent aux niveaux moyens du signal à vidéofréquence. Cette distorsion se traduit donc par une expansion du niveau des gris moyens aussi bien par rapport au blanc que par rapport au noir. Pour précorriger une telle distorsion d'amplitude, il est nécessaire de pouvoir atténuer seulement les gris, sans affecter l'amplification des blancs ou des noirs.

L'invention a pour objet un dispositif de correction permettant de résoudre le problème de l'expansion des niveaux intermédiaires dans un émetteur de télévision, au moyen d'un circuit correcteur à vidéofréquence sélectif en fréquence, facile à régler, qui permet par ailleurs de ne pas affecter le gain différentiel. Ce circuit de correction peut être adapté pour précorriger toute distorsion d'amplitude, qui affecterait le signal à vidéofréquence à la sortie des étages haute fréquence en l'absence d'un tel circuit, quel que soit le type de modulation mis en œuvre dans l'émetteur.

Suivant l'invention, un dispositif de correction de non-linéarité vidéofréquence à efficacité sélective, pour la précorrection des non-linéarités introduites sur le signal vidéofréquence dans les étages hautes fréquences d'un équipement de télévision, est caractérisé en ce qu'il comporte une entrée de signal vidéofréquence reliée à l'entrée d'un distributeur ayant au moins deux sorties respectivement reliées à l'entrée d'une voie large bande et à l'entrée d'une voie de correction à basses fréquences, cette voie de correction comportant un filtre passe-bas dont la sortie est couplée à au moins un circuit correcteur à seuils comportant des moyens de sélection des plages de niveaux à corriger et des moyens de réglage d'amplitude associés, la sortie du circuit correcteur étant couplée à la sortie de la voie de correction à basses fréquences, les sorties de la voie large bande et de la voie de correction étant reliées à deux entrées correspondantes d'un circuit de sortie combinant les signaux de sortie correspondants pour former un signal précorrigé affecté de non-linéarités complémentaires de celles à corriger.

L'invention sera mieux comprise et d'autres caractéristiques apparaîtront à l'aide de la description qui suit en référence aux figures annexées.

Les fig. 1a, 1b et 1c représentent des diagrammes de signaux permettant de mettre en évidence la non-linéarité des niveaux intermédiaires dans un émetteur utilisant une modulation d'amplitude à porteuse réduite;

la fig. 2 représente la caractéristique de transfert, et le gain correspondant, en fonction du niveau d'entrée d'un amplificateur classe AB;

la fig. 3 est un schéma synoptique d'un mode de réalisation du dispositif de correction suivant l'invention;

la fig. 4 est un diagramme de signaux explicatifs;

la fig. 5 est un premier mode de réalisation du circuit correcteur utilisé dans le dispositif selon l'invention;

la fig. 6 représente un diagramme de signal mettant en évidence le résultat obtenu avec un dispositif de correction comportant le circuit correcteur représenté sur la fig. 5;

la fig. 7 est un second mode de réalisation du circuit correcteur utilisé dans le dispositif suivant l'invention;

les fig. 8a, 8b, et 8c représentent des diagrammes de signaux mettant en évidence les formes de précorrection obtenues avec un dispositif de correction comportant le circuit correcteur représenté sur la fig. 7, pour différents réglages;

la fig. 9 est un schéma synoptique d'un autre mode de réalisation du dispositif de précorrection actif dans différentes bandes de fréquences.

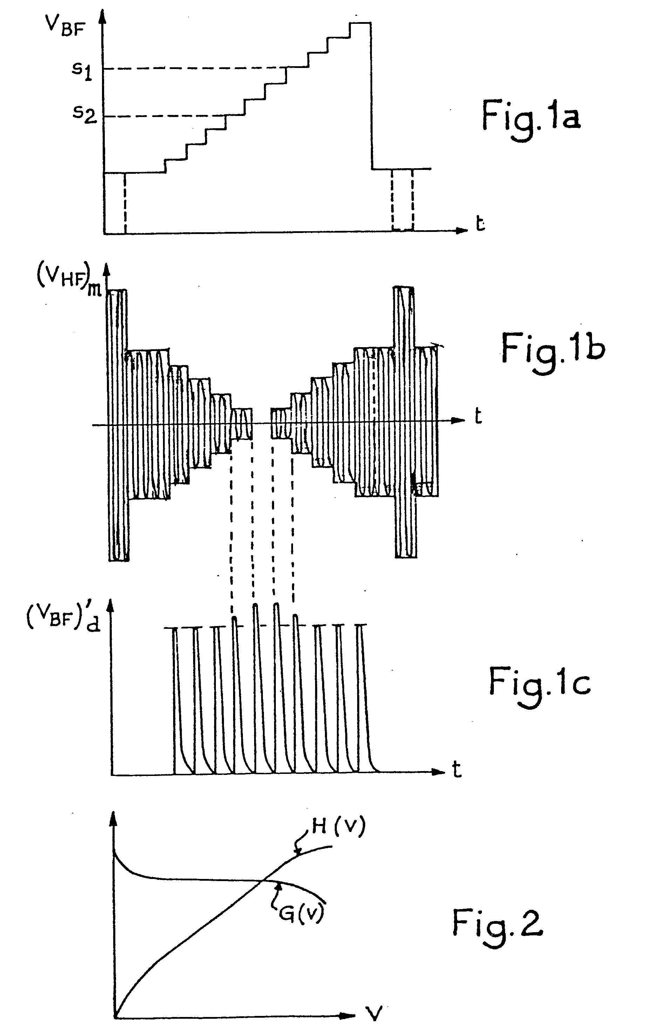

La fig. 1a représente un signal de luminance de test, $V_{BF}$, appliqué sur l'entrée vidéo de l'émetteur. Ce signal comporte une impulsion de synchronisation entre 0 et 0,3 V et un signal croissant en forme de marches d'escalier jusqu'à 1 V.

La fig. 1b montre un signal modulé à porteuse réduite $(V_{HF})_m$. Son amplification par un amplificateur classe AB, associée à une amplification de la porteuse non modulée par un amplificateur classe C, permet d'augmenter de façon très importante le rendement.

Mais du fait de la caractéristique de transfert $H(V)$ et de la variation de gain $G(V)$ qui en résulte, ainsi que le montre la fig. 2, les faibles niveaux de modulation subissent une expansion; ces faibles niveaux correspondent aux gris moyens du signal de luminance vidéofréquence.

Cette non-linéarité se traduit par une amplification trop forte des niveaux moyens, et sur le signal à vidéofréquence démodulé, les marches d'escalier centrales correspondant aux gris ont une amplitude plus grande que celles correspondant au blanc ou au noir.

La fig. 1c montre ce signal démodulé différentié $(V_{BF})_d$, pour faire apparaître les différences de niveaux. Cette non-linéarité au gris peut être de l'ordre de 10%.

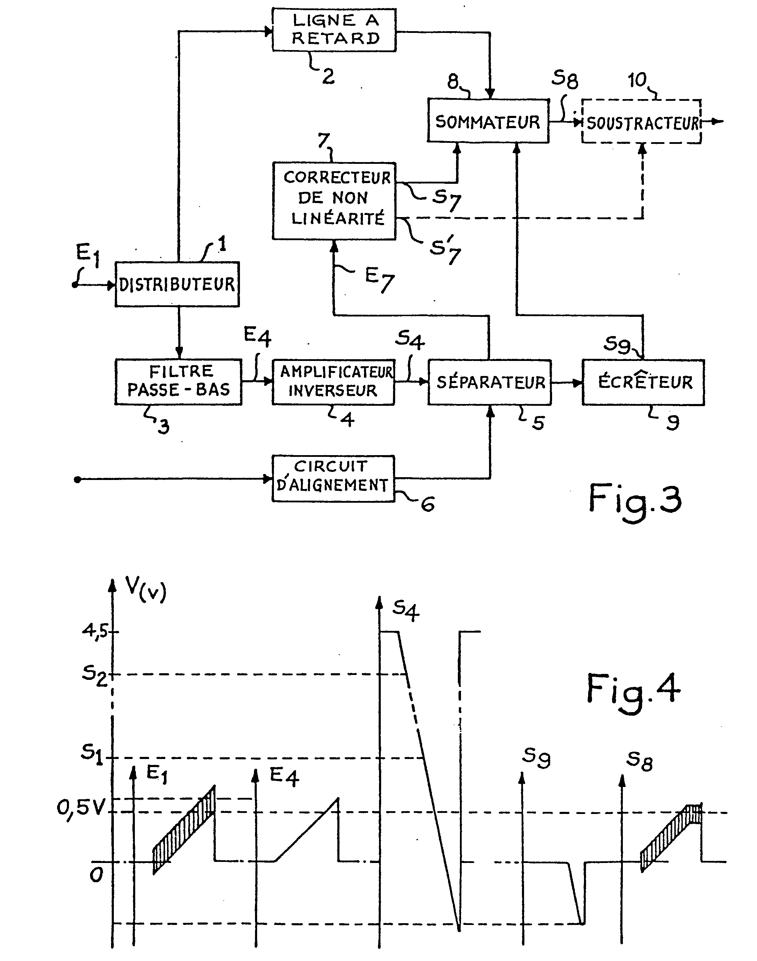

La fig. 3 représente le schéma synoptique du dispositif de correction inséré dans les étages à vidéofréquence d'un équipement de télévision, suivant l'invention. Ce dispositif comporte une entrée de signal vidéofréquence $E_1$ reliée à l'entrée d'un distributeur 1, cette entrée étant alimentée par le signal de sortie d'un circuit séparateur de synchronisation non représenté qui ne transmet que le signal vidéo à l'exclusion des impulsions de synchronisation. Ce signal est donc distribué par le distributeur 1 dans deux voies. Une voie dite directe, à large bande, comporte principalement une ligne à retard 2, et une voie, dite voie de traitement, comportant en série un filtre passe-bas 3, coupant le spectre de fréquence à 2,4 MHz par exemple, c'est-à-dire le signal transmis en double bande. Ce filtre passe-bas 3 a sa sortie reliée à l'entrée d'un amplificateur inverseur 4 dont la sortie est reliée à l'entrée d'un circuit séparateur 5. Ce circuit séparateur comporte par ailleurs une seconde entrée reliée à la sortie d'un circuit d'alignement 6 recevant des impulsions intervenant pendant les intervalles de signaux de synchronisation; cet alignement permet de fixer le niveau de suppression dans le circuit séparateur 5.

Le retard introduit par la ligne à retard 2 de la voie large bande est égal au retard introduit dans la voie auxiliaire de traitement, ce retard étant principalement dû au filtre passe-bas 3.

La voie de traitement comporte en outre un circuit correcteur particulièrement adapté à la correction de l'expansion des gris moyens; ce circuit correcteur 7 est inséré entre une sortie du séparateur 5 et une entrée d'un sommateur de sortie 8 dont la première entrée est reliée à la sortie de la ligne à retard de la voie large bande.

Ce circuit correcteur 7 permet de sélectionner, par un système à diodes, une partie du signal vidéofréquence à basse fréquence. Ce signal sélectionné, qui a une polarité inverse de celle de la partie correspondante du signal dans la voie large bande du fait de l'amplificateur inverseur 4, est additionné au signal large bande transmis par la voie principale dans le sommateur 8.

La forme de ce dispositif de correction permet de combiner, à la fonction de précorrection de non-linéarité vidéofréquence, la fonction de limitation du signal à vidéofréquence, une telle limitation étant nécessaire pour que le taux de modulation ne soit pas trop grand. Pour cela, le circuit séparateur 5 comporte une deuxième sortie reliée à l'entrée d'un circuit écrêteur 9 sélectionnant la partie du signal qui doit être écrêtée. La sortie de ce circuit écrêteur est reliée à une troisième entrée du circuit sommateur de sortie 8. Si le seuil de limitation pour les amplitudes élevées est fixé par exemple à 0,5 V, lorsque le signal à l'entrée vidéo ne dépasse pas 0,5 V, aucun signal n'apparaît à la sortie de l'écrêteur 9 et le signal vidéo est transmis tel quel à la sortie du sommateur 8 par la voie large bande. Par contre lorsque le signal vidéo à l'entrée dépasse 0,5 V, le signal de sortie de l'écrêteur est additionné au signal vidéo de la voie large bande pour fournir le signal à vidéofréquence limité à la sortie du sommateur 8 à destination du modulateur. Les conditions d'amplitude réalisées dans le sommateur 8 permettent d'avoir une pente nulle après le seuil de limitation. Ce circuit de limitation des amplitudes élevées permet, du fait qu'il ne traite que des composantes basse fréquence du spectre, de respecter l'amplitude et la phase du signal portant l'information de chrominance même pour les niveaux qui doivent être limités; il permet également de respecter la bande passante de ce signal de chrominance et de n'introduire aucune perturbation si le signal d'entrée ne dépasse pas l'amplitude nominale de 0,5 V par exemple. De plus, le seuil d'action du limiteur est très franc du fait que la caractéristique de conduction de la diode d'écrêtage dans la voie auxiliaire de traitement est brutale.

La fig. 4 représente la forme des signaux en différents points du dispositif représenté sur la fig. 3 lorsque le taux de correction par le circuit correcteur 7 est nul: le signal $E_1$ à l'entrée du distributeur 1, supposé être une rampe pour le signal de luminance à laquelle est superposée la sous-porteuse de chrominance; le signal $E_4$ à l'entrée de l'amplificateur inverseur 4, ce signal ne comportant plus la sous-porteuse de chrominance du fait du filtrage passe-bas; le signal $S_4$ à la sortie de l'amplificateur 4; le signal $S_9$ à la sortie de l'écrêteur; et le signal $S_8$ à la sortie du sommateur 8. Le signal $S_8$ est limité pour les fortes amplitudes du signal à vidéofréquence, c'est-à-dire au blanc.

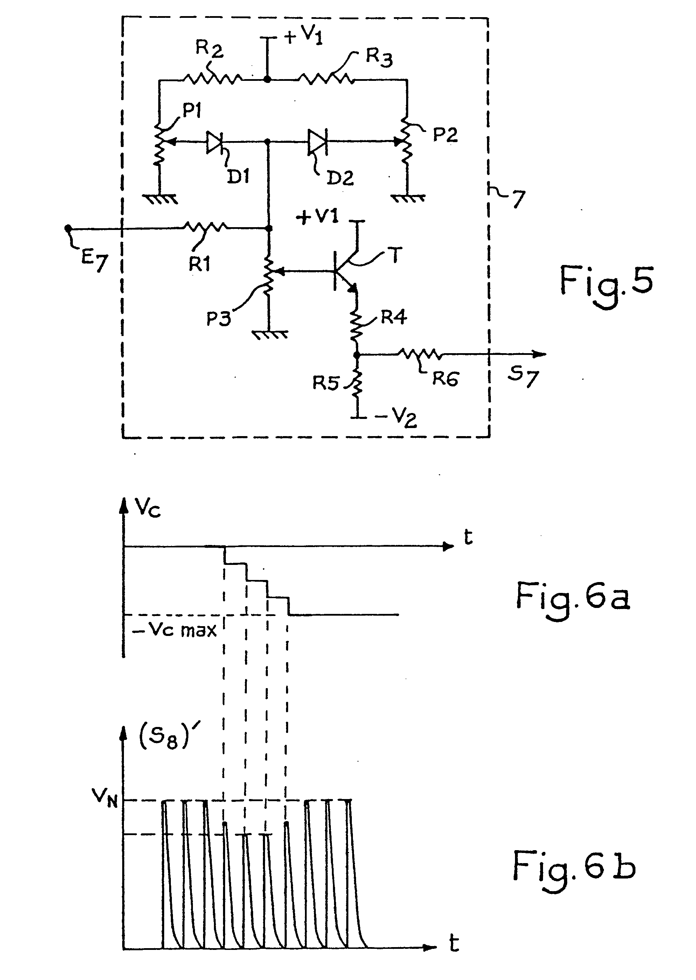

La fig. 5 représente un mode de réalisation détaillé du circuit correcteur 7.

L'entrée $E_7$ est reliée par l'intermédiaire d'une résistance d'entrée $R_1$ au point commun à deux diodes $D_1$ et $D_2$, la première étant montée dans le sens direct et la seconde dans le sens inverse, les autres bornes de ces deux diodes étant connectées aux curseurs de deux potentiomètres, respectivement $P_1$ et $P_2$. Ces deux potentiomètres sont reliés, d'une part, à la masse et, d'autre part, aux premières bornes de deux résistances, respectivement $R_2$ et $R_3$ dont les autres bornes sont reliées à un point de potentiel positif $+V_1$.

La borne commune aux deux diodes $D_1$ et $D_2$ et à la résistance $R_1$ est par ailleurs reliée à une borne d'un potentiomètre $P_3$ dont l'autre borne est reliée à la masse. Le curseur de ce potentiomètre $P_3$ est relié à la base d'un transistor T de type pnp dont le collecteur est relié à la borne d'alimentation positive $+V_1$ et dont l'émetteur est relié à la borne d'alimentation négative $-V_2$ par l'intermédiaire d'un réseau de résistances $R_4$, $R_5$. Le point commun à ces deux résistances est relié par une résistance de sortie $R_6$ à la borne de sortie du circuit correcteur $S_7$.

Le signal de sortie de l'amplificateur inverseur $S_4$ appliqué à l'entrée $E_7$ du circuit correcteur, lorsque l'amplitude du signal d'entrée vidéo ne dépasse pas l'amplitude nominale, soit 0,5 V, est variable entre $+4,5$ V et la masse par exemple (fig. 4).

Ce circuit fonctionne de la manière suivante: la partie du signal supérieur à un seuil $S_2$ est écrêté par la diode $D_2$, et la partie inférieure à un seuil $S_1$ est écrêtée par la diode $D_1$. Les seuils d'écrêtage, $S_1$ et $S_2$, sont réglés par les potentiomètres $P_1$ et $P_2$ dont les curseurs se comportent comme des sources de tension. Une partie du signal de correction est prélevée sur le curseur du potentiomètre $P_3$ et transmise au montage à collecteur commun formé par le transistor T et les résistances $R_4$ et $R_5$.

La sommation du signal de correction ainsi obtenu au signal de la voie large bande disponible à la sortie de la ligne à retard se fait par les résistances $R_4$, $R_5$ et $R_6$ et l'impédance équivalente du circuit vue à travers la ligne à retard, en parallèle avec l'impédance du sommateur.

Lorsqu'un signal tel que $V_{BF}$ représenté sur la fig. 1a est appliqué à l'entrée vidéo $E_1$ du distributeur 1 et que les seuils $S_1$ et $S_2$ correspondent aux niveaux respectivement $s_1$ et $s_2$ (fig. 1a) le signal écrêté correspondant $V_C$, appliqué à la base du transistor T, est représenté sur la fig. 6a et le signal de sortie du dispositif de correction $S_8$, après différentiation, est représenté sur la fig. 6b. Il montre une compression limitée aux niveaux intermédiaires qui atteint 20% de l'amplitude nominale $V_N$ des marches du signal appliqué à l'entrée.

Le réglage de l'efficacité de la correction par le potentiomètre $P_3$ entraîne une variation de l'amplitude du signal de sortie $S_8$. Cette variation est rattrapée dans un autre étage de l'émetteur, de préférence en aval du dispositif de correction pour ne pas modifier le réglage des seuils de correction et du seuil de limitation au blanc. Ainsi la profondeur de modulation garde une valeur convenable.

Ce circuit permet donc de déterminer la plage des niveaux du signal vidéofréquence comprise entre les deux seuils $s_1$ et $s_2$ dans laquelle la correction sera effective.

L'efficacité de la correction déterminée par le potentiomètre $P_3$ n'est pas limitée. Elle peut être adaptée au type de défauts à corriger. Dans un système destiné à corriger les non-linéarités d'amplitude pour les gris moyens, le défaut est corrigé en faisant subir au signal vidéofréquence une compression au gris moyen. Compte tenu du taux de non-linéarité dans le signal, une efficacité maximale de 20% pour la correction est très suffisante pour corriger le défaut décrit ci-dessus.

Mais un tel système peut également être utilisé pour une correction au blanc ou au noir, en déplaçant simplement les seuils par réglage des potentiomètres $P_1$ et $P_2$.

Il est possible en réalisant un système un peu plus élaboré d'agir dans plusieurs plages de niveaux du signal de vidéofréquence et de prévoir une inversion possible du sens de la correction de façon à réaliser, dans chaque plage déterminée par des seuils, une expansion ou une compression du signal vidéofréquence destinées à compenser respectivement une compression ou une expansion du signal vidéofréquence dans les étages haute fréquence.

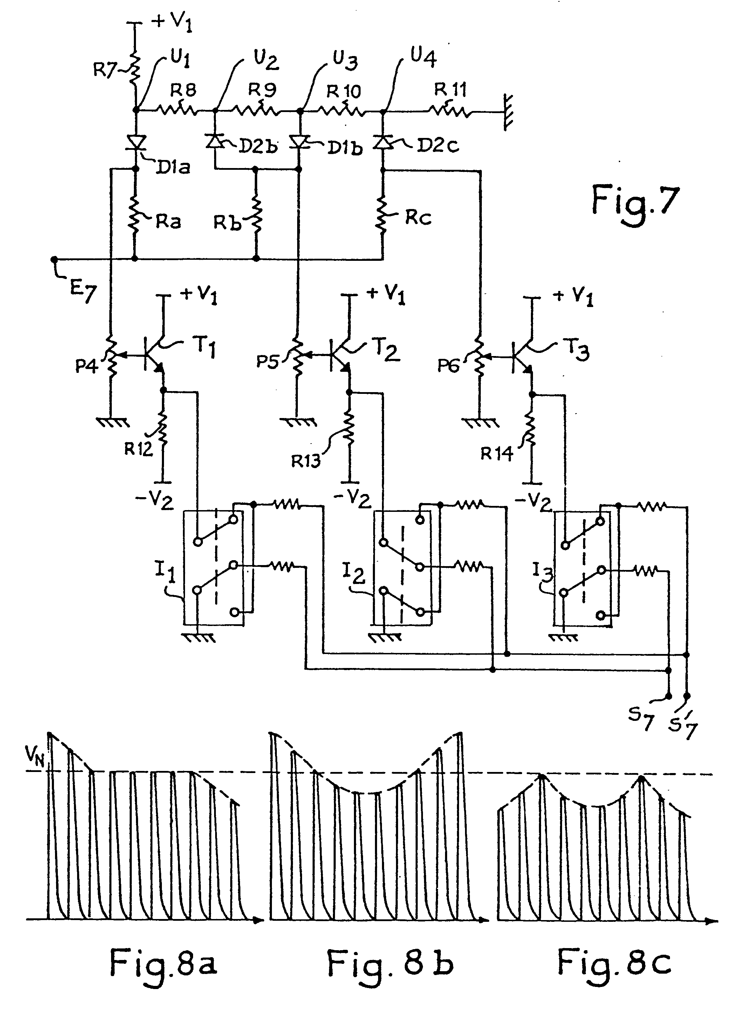

La fig. 7 représente un mode de réalisation d'un tel circuit de correction dans lequel trois zones de correction sont déterminées, l'efficacité de la correction dans chacune de ces zones pouvant être réglée indépendamment des efficacité fixées dans les autres zones; le système comporte en outre des moyens d'inversion permettant de réaliser soit une compression, soit une expansion pour chacune de ces zones.

Dans ce mode de réalisation, l'entrée $E_7$ du circuit de correction 7 est reliée par trois résistance d'entrée $R_a$, $R_b$ et $R_c$ à des diodes de limitation

$D_{1a}, D_{2b}$ et $D_{1b}, D_{2c}$. Les secondes bornes de ces diodes sont reliées à des sources de tension $U_1$, $U_2$, $U_3$ et $U_4$ déterminées par des résistances $R_7$, $R_8$, $R_9$, $R_{10}$ et $R_{11}$ branchées en série entre la source d'alimentation positive $+V_1$ et la masse. La diode $D_{1a}$ écrête les valeurs du signal vidéofréquence inférieures au seuil $U_1$, la diode $D_{2c}$ écrête les valeurs supérieures à la tension $U_4$, les diodes $D_{1b}$ et $D_{2b}$ écrêtent les valeurs respectivement inférieures au seuil $U_3$ et supérieures au seuil $U_2$. Les signaux écrêtés disponibles sur les secondes bornes des résistances $R_a$, $R_b$ et $R_č$ sont transmis à des transistors séparateurs respectivement $T_1$, $T_2$ et $T_3$ par l'intermédiaire de potentiomètres de réglage d'efficacité, respectivement $P_4$, $P_5$, $P_6$. Les transistors $T_1$, $T_2$ et $T_3$ sont montés en collecteur commun, leur collecteur étant relié à la borne d'alimentation positive $+V_1$ et leurs émetteurs étant reliés à la borne d'alimentation négative $-V_2$ par des résistances de polarisation respectivement $R_{12}$, $R_{13}$ et $R_{14}$.

Les signaux de correction disponibles sur les émetteurs des transistors $T_1$, $T_2$ et $T_3$ sont transmis à des bornes de sortie respectivement $S_7$ et $S'_7$ par l'intermédiaire des commutateurs doubles $I_1$, $I_2$ et $I_3$. Ces bornes de sortie $S_7$ et $S'_7$ sont destinées à être connectées en des points différents du dispositif; la borne $S_7$ est reliée comme précédemment à une entrée du sommateur 8, le résultat étant une compression du signal vidéo dans les zones correspondantes; la borne $S'_7$ est reliée à une entrée d'un soustracteur 10 représenté en pointillé sur la fig. 3, le résultat étant une expansion du signal vidéo dans les zones correspondantes. Comme précédemment, les potentiomètres $P_4$, $P_5$ et $P_6$ permettent de doser l'amplitude du signal de correction combiné au signal vidéo, et donc l'efficacité de cette correction. Les commutateurs $I_1$, $I_2$ et $I_3$ ayant leur partie mobile à la masse commutent à la masse les résistances qui ne transmettent pas le signal de correction de façon qu'il n'y ait pas de perturbation dans le dispositif. En effet, si l'on considère que l'impédance de sortie des montages collecteur commun $T_1$, $T_2$ et $T_3$ est faible (une dizaine d'ohms) vis-à-vis de la valeur des résistances qui suivent les inverseurs, l'impédance ramenée sur les sorties $S_7$ et $S'_7$ par le circuit de correction reste constante quelle que soit la position des commutateurs. Ainsi l'amplitude des signaux vidéo n'est pas perturbée.

Un tel circuit permet de réaliser de manière très simple une compression ou une expansion avec une efficacité dans des zones prédéterminées; le réglage de l'efficacité dans chaque zone d'action ne modifiant pas cette zone d'action elle-même et les réglages d'efficacité étant indépendants les uns des autres.

Les fig. 8a, 8b et 8c montrent des exemples de signaux précorrigés (après différentiation) susceptibles d'être obtenus à la sortie du dispositif de correction pour des réglages donnés et des positions déterminées des commutateurs doubles.

La fig. 8a montre une expansion au noir (premières marches du signal) et une compression au blanc (dernières marches du signal), les niveaux intermédiaires n'étant pas modifiés, $V_N$ étant le niveau nominal.

La fig. 8b montre une expansion au noir, une compression au gris et une expansion au blanc. Les positions des inverseurs doubles $I_1$, $I_2$ et $I_3$ sur la fig. 7 correspondent à ce type de correction.

La fig. 8c montre une compression au noir, au gris et au blanc.

Le perfectionnement consistant à prévoir deux sorties qui n'apportent pas de perturbation permet de choisir facilement par les inverseurs le signe de la correction appliquée dans une zone déterminée.

Un tel circuit, comme le premier mode de réalisation décrit en référence à la fig. 3, ne perturbe ni le gain différentiel ni la phase différentielle du fait qu'il agit uniquement sur le signal filtré à vidéofréquence et non sur les signaux de fréquences supérieures à la fréquence de coupure du filtre passe-bas, soit 2,4 MHz par exemple. Le mode de réalisation du circuit de correction décrit en référence à la fig. 7 est prévu avec trois cellules de correction. Il est possible d'augmenter le nombre de telles cellules de correction pour adapter la caractéristique de correction à la finesse de la correction désirée; en pratique, un système à six ou sept cellules permet d'obtenir une caractéristique de correction très précise.

Dans le dispositif décrit en référence à la fig. 3, une voie à fréquences basses a été représentée, le signal de sortie de cette voie de correction étant combiné au signal de sortie de la voie large bande pour réaliser une précorrection sélective dans la bande basses fréquences du signal vidéo. Il est possible d'utiliser un dispositif analogue pour précorriger le signal à vidéofréquence sélectivement dans une autre bande de fréquences, par exemple pour corriger un défaut de linéarité apparaissant seulement dans la bande de la sous-porteuse chrominance. Pour cela, les parties correspondantes du signal sont sélectionnées par un filtre passe-bande; la plage des niveaux à corriger est sélectionnée comme précédemment par seuils à partir du signal à basse fréquence, et l'efficacité de la correction est ajustée par variation d'amplitude de ce signal. Ce signal permet de modeler l'amplitude du signal sélectionné dans la bande, ces deux signaux étant appliqués aux entrées d'un modulateur dont le signal de sortie est combiné avec le signal non traité transmis par la voie large bande. Il est également possible de réaliser un dispositif de précorrection agissant de manière différente dans plusieurs bandes de fréquences.

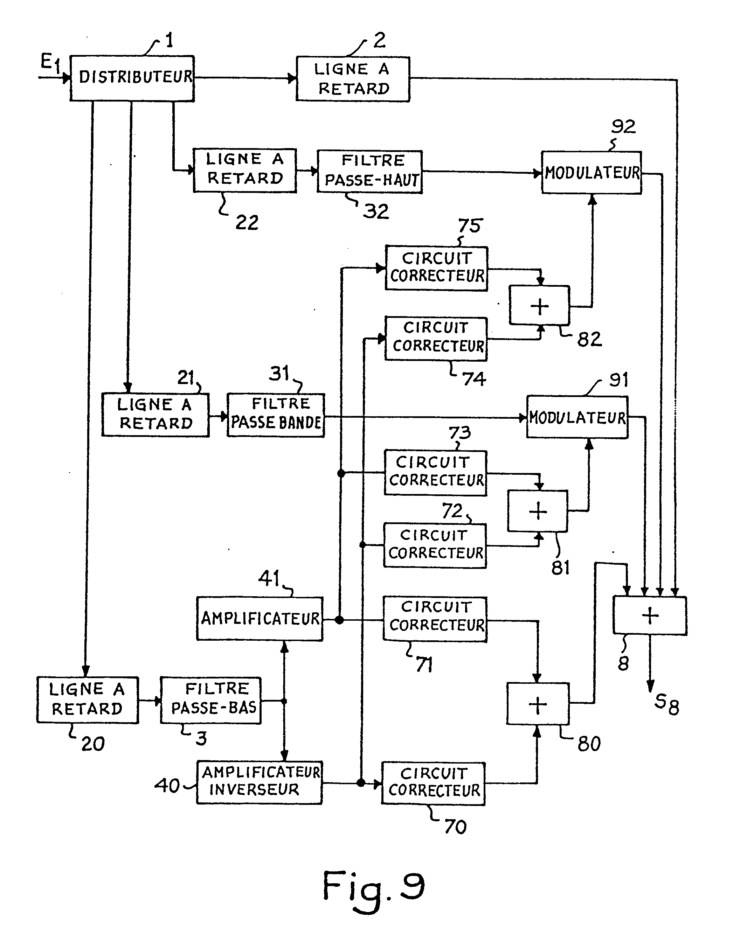

La fig. 9 représente un mode de réalisation d'un tel dispositif de précorrection à efficacité sélective, universel, c'est-à-dire couvrant sélectivement toute la bande de fréquences du signal vidéo.

Il comporte, comme celui représenté sur la fig. 3, un distributeur d'entrée 1, dont une sortie est reliée à une voie large bande comportant une ligne à retard 2. Le distributeur comporte également trois autres sorties reliées aux entrées de trois voies de correction sélectives, l'une à basse fréquence, comportant une ligne à retard 20, et un filtre passe-bas 3 relié à un amplificateur inverseur 40 et à un amplificateur non inverseur 41. Les sorties de ces amplificateurs sont reliées à des circuits correcteurs à seuils 70 et 71 dont les sorties sont reliées à un sommateur 80.

Le signal de sortie du sommateur 80 est le signal de précorrection à superposer au signal de la voie large bande dans le sommateur de sortie 8, la partie de ce signal issue de l'amplificateur inverseur réalisant une précorrection par compression, tandis que la partie du signal issue de l'amplificateur non inverseur réalise une précorrection par expansion.

Une seconde voie de correction, à fréquences médianes, comporte une ligne à retard 21, un filtre passe-bande 31 relié à la première entrée d'un modulateur, en anneau par exemple 91. La seconde entrée de ce modulateur reçoit un signal de modulation permettant de modeler l'amplitude du signal sélectionné par le filtre passe-bande.

Pour cela, les sorties des amplificateurs 40 et 41 sont reliées aux entrées de deux circuits correcteurs à seuils, 72 et 73, sélectionnant pour chaque sens de correction la plage des niveaux à corriger pour le signal à fréquences médianes et permettant de régler l'efficacité de la correction. Ces deux circuits correcteurs sont reliés aux entrées d'un sommateur 81 dont la sortie est reliée à la seconde entrée du modulateur 91, sa sortie étant reliée à une troisième entrée du sommateur de sortie 8.

De la même manière, une troisième voie de correction à fréquences hautes comporte une ligne à retard 22, un filtre passe-haut 32 relié à un modulateur en anneau 92, dont la sortie est reliée à la quatrième entrée du sommateur de sortie 8. Deux circuits correcteurs 74 et 75 sont reliés aux amplificateurs respectivement inverseur 40 et non inverseur 41, leurs sorties étant reliées à un sommateur 82 dont la sortie est reliée à la seconde entrée du modulateur 92.

Les lignes à retard placées dans chacune des voies permettent de rattraper les décalages susceptibles d'intervenir entre les voies du fait des filtres.

Un tel dispositif de correction permet d'agir sélectivement sur le signal à vidéofréquence en réalisant par exemple une compression des niveaux moyens du signal de luminance, en même temps qu'une expansion de ces mêmes niveaux moyens dans la bande de la sous-porteuse de chrominance ou toute autre combinaison d'expansion ou de compression avec une efficacité réglable dans les bandes de fréquences déterminées par les filtres.

Ce type de dispositif de correction d'amplitude à vidéofréquence à efficacité sélective en fréquence est particulièrement applicable aux émetteurs de télévision réalisant une amplification séparée des voies porteuses image et son, ou aux émetteurs de télévision réalisant une amplification à porteuse réduite dans la voie image. Mais il peut également être utilisé dans les émetteurs de télévision en amplification commune des voies, comme complément d'un correcteur d'intermodulation du troisième ordre.

Dans les émetteurs de télévision utilisant des klystrons comme amplificateurs de puissance, un circuit de correction du type décrit en référence à la fig. 7 est applicable pour corriger les distorsions dites en S. Un tel circuit de correction peut également être utilisé dans les caméras de télévision et dans tous les équipements où un traitement du signal vidéofréquence est nécessaire. Par ailleurs, le mode de réalisation dans lequel une seule zone d'action est sélectionnée peut être utilisé comme circuit de limitation au blanc, en choisissant convenablement les valeurs des éléments du circuit de sortie $R_4$, $R_5$ et $R_6$ sur la fig. 4.

## Revendications

1. Dispositif de correction de non-linéarité vidéofréquence à efficacité sélective, pour la précorrection des non-linéarités introduites sur le signal vidéofréquence dans les étages hautes fréquences d'un équipement de télévision, caractérisé en ce qu'il comporte une entrée ($E_1$) de signal vidéofréquence reliée à l'entrée d'un distributeur (1) ayant au moins deux sorties respectivement reliées à l'entrée d'une voie large bande et à l'entrée d'une voie de correction à basses fréquences, cette voie de correction comportant un filtre passe-bas (3) dont la sortie est couplée à au moins un circuit correcteur à seuils (7) comportant des moyens de sélection des plages de niveaux à corriger et des moyens de réglage d'amplitude associés, la sortie du circuit correcteur étant couplée à la sortie de la voie de correction à basses fréquences, les sorties de la voie large bande et de la voie de correction étant reliées à deux entrées correspondantes d'un circuit de sortie (8) combinant les signaux de sortie correspondants pour forer un signal précorrigé affecté de non-linéarités complémentaires de celles à corriger.

2. Dispositif selon la revendication 1, caractérisé en ce qu'il comporte en outre une voie de correction des composantes aux fréquences les plus hautes du signal à vidéofréquence, dont l'entrée est reliée à une sortie supplémentaire du distributeur, comportant un filtre passe-haut (32) dont la sortie est couplée à l'entrée de signal d'un modulateur (92), cette voie de correction comportant en outre au moins un circuit correcteur à seuils (74) ayant son entrée couplée à la sortie du filtre passe-bas (3) de la voie à basses fréquences, et sa sortie couplée à l'entrée de modulation du modulateur (92) dont la sortie constitue la sortie de la voie de correction à hautes fréquences, cette sortie étant couplée à une entrée supplémentaire du circuit de sortie (8).

3. Dispositif selon la revendication 1, caractérisé en ce qu'il comporte en outre une voie de correction des composantes aux fréquences médianes du signal à des fréquences dont l'entrée est reliée à une sortie supplémentaire du distributeur, comportant un filtre passe-bandes (31) dont la sortie est couplée à l'entrée de signal d'un modulateur (91), cette voie de correction comportant en outre au moins un circuit correcteur à seuils (72) ayant son entrée couplée à la sortie du filtre passe-bas (3) de la voie à basses fréquences, et sa sortie couplée à l'entrée de modulation du modulateur (91) dont la sortie constitue la sortie de la voie de correction à fréquences médianes, cette sortie étant couplée à une entrée supplémentaire du circuit de sortie (8).

4. Dispositif selon les revendications 1, 2 et 3 en combinaison, caractérisé en ce que les bandes de fréquences de trois voies de correction respectivement à basses, médianes et hautes fréquences sont contiguës pour former un dispositif de correction universel.

5. Dispositif selon l'une des revendications précédentes, caractérisé en ce que chaque circuit correcteur à seuils comporte des moyens de sélection d'au moins une plage de niveau à corriger, déterminée par des seuils et des moyens de réglage d'amplitude du signal sélectionné y associés fixant l'efficacité de la correction dans la plage correspondante.

6. Dispositif selon la revendication 5, caractérisé en ce que les moyens de sélection comportent des moyens de réglage ($P_1$, $P_2$) de ces seuils, et en ce que les moyens de réglage ($P_4$, $P_5$, $P_6$) de l'efficacité de la correction à appliquer aux composantes agissent de manière indépendante dans chacune des plages de niveaux.

7. Dispositif de correction selon l'une des revendications 1 à 6, caractérisé en ce qu'un premier circuit correcteur (71), sélectionnant les niveaux à précorriger par une expansion d'amplitude, et un second circuit correcteur (70) sélectionnant les niveaux à précorriger par une compression d'amplitude sont associés à chaque voie de correction, la voie à basses fréquences comportant un amplificateur non inverseur (41) et un amplificateur inverseur (40) reliés à la sortie du filtre passe-bas, les sorties de ces amplificateurs étant respectivement reliées aux entrées des premier et second circuits correcteurs dont les sorties sont reliées aux entrées d'un additionneur fournissant un signal de correction global, la sortie de l'additionneur étant reliée à la sortie de la voie de correction correspondante.

## Patentansprüche

1. Vorrichtung zur Videofrequenz-Nichtlinearitätskorrektur mit selektiver Wirksamkeit zum Vorkorrigieren der Nichtlinearitäten, die an dem Videofrequenzsignal in den Hochfrequenzstufen einer Fernsehanlage auftreten, dadurch gekennzeichnet, dass sie einen Videofrequenz-Signaleingang ($E_1$) enthält, der mit dem Eingang eines Verteilers (1) verbunden ist, welcher wenigstens zwei Ausgänge aufweist, von denen der erste mit dem Eingang eines breitbandigen Zweiges und der zweite mit dem Eingang eines Niederfrequenz-Korrekturzweiges verbunden ist, wobei dieser Korrekturzweig ein Tiefpassfilter (3) umfasst, dessen Ausgang an wenigstens eine Schwellwert-Korrekturschaltung (7) angekoppelt ist, welche Selektionsmittel zum Auswählen von zu korrigierenden Pegelbereichen und zugeordnete Amplitudeneinstellmittel umfasst, wobei der Ausgang der Korrekturschaltung an den Ausgang des Niederfrequenz-Korrekturzweiges angekoppelt ist und die Ausgänge des breitbandigen Zweiges und des Korrekturzweiges mit zwei entsprechenden Eingängen einer Ausgansschaltung (8) verbunden sind, welche die entsprechenden Ausgangssignale miteinander kombiniert, um ein vorkorrigiertes Signal zu bilden, das mit Nichtlinearitäten behaftet ist, welche komplementär zu den zu korrigierenden sind.

2. Vorrichtung nach Anspruch 1, dadurch gekennzeichnet, dass sie ferner einen Korrekturzweig zum Korrigieren der Komponenten bei den höchsten Frequenzen des Videofrequenzsignales umfasst, dessen Eingang mit einem zusätzlichen Ausgang des Verteilers verbunden ist und der ein Hochpassfilter (32) enthält, dessen Ausgang mit dem Signaleingang eines Modulators (92) verbunden ist, wobei dieser Korrekturzweig ferner wenigstens eine Schwellwert-Korrekturschaltung (74) umfasst, deren Eingang an den Ausgang des Tiefpassfilters (3) des Niederfrequenzzweiges angekoppelt ist und dessen Ausgang an den Motulationseingang des Modulators (92) angekoppelt ist, dessen Ausgang den Ausgang des Hochfrequenz-Korrekturzweiges bildet, wobei dieser Ausgang mit einem zusätzlichen Eingang der Ausgansschaltung (8) verbunden ist.

3. Vorrichtung nach Anspruch 1, dadurch gekennzeichnet, dass sie ferner einen Korrekturzweig zum Korrigieren bei den mittleren Frequenzen des Signals umfasst, dessen Eingang mit einem zusätzlichen Ausgang des Verteilers verbunden ist und der ein Bandpassfilter (31) enthält, dessen Ausgang an den Signaleingang eines Modulators (91) angekoppelt ist, wobei dieser Korrekturzweig ferner wenigstens eine Schwellwert-Korrekturschaltung (72) umfasst, deren Eingang an den Ausgang des Tiefpassfilters (3) des Niederfrequenzzweiges angekoppelt ist und deren Ausgang an den Modulationseingang des Modulators (91) angekoppelt ist, dessen Ausgang den Ausgang des Korrekturzweiges für mittlere Frequenzen bildet, wobei dieser Ausgang an einen zusätzlichen Eingang der Ausgansschaltung (8) angekoppelt ist.

4. Vorrichtung nach den miteinander kombinierten Ansprüchen 1, 2 und 3, dadurch gekennzeichnet, dass die Frequenzbänder aller drei Korrekturzweige, nämlich für niedrige, mittlere und hohe Frequenzen aneinander anschliessen, um eine universelle Korrekturvorrichtung zu bilden.

5. Vorrichtung nach einem der vorstehenden Ansprüche, dadurch gekennzeichnet, dass jede Schwellwert-Korrekturschaltung Selektionsmittel zum Auswählen wenigstens eines zu korrigierenden Pegelbereiches umfasst, der durch Schwellwerte bestimmt ist, sowie zugeordnete Einstellmittel zum Einstellen der Amplitude des ausgewählten Signals umfasst, welche die Wirksamkeit der Korrektur in dem entsprechenden Bereich festlegen.

6. Vorrichtung nach Anspruch 5, dadurch gekennzeichnet, dass die Selektionsmittel Einstellmittel (P$_1$, P$_2$) zum Einstellen dieser Schwellwerte umfassen und dass die Einstellmittel (P$_4$, P$_5$, P$_6$) zum Einstellen der Korrekturwirksamkeit für die Komponenten voneinander unabhängig in jedem der Pegelbereiche wirksam sind.

7. Korrekturvorrichtung nach einem des Ansprüche 1 bis 6, dadurch gekennzeichnet, dass eine erste Korrekturschaltung (71), welche die durch eine Amplitudendehnung vorzukorrigierenden Pegel auswählt, und eine zweite Korrekturschaltung (70), welche die durch eine Amplitudenkompression vorzukorrigierenden Pegel auswählt, jedem der Korrekturzweige zugeordnet sind, wobei der Niederfrequenzzweig einen nichtinvertierenden Verstärker (41) und einen invertierenden Verstärker (40) umfasst, welche mit dem Ausgang des Tiefpassfilters verbunden sind, wobei die Ausgänge dieser Verstärker mit den Eingängen der ersten bzw. der zweiten Korrekturschaltung verbunden sind, deren Ausgänge mit den Eingängen eines Addierrers verbunden sind, welcher ein globales Korrektursignal liefert, wobei der Ausgang des Addieres mit dem Ausgang des entsprechenden Korrekturzweiges verbunden ist.

## Claims

1. Videofrequency non-linearity correction device with selective efficiency for the precorrection of non-linearities introduced into the videofrequency signal within the high frequency stages of a television implement, characterized in that it comprises a videofrequency signal input (E$_1$) connected to the output of a distributor (1) having at least two outputs respectively connected to the input of a wide band path and the input of a low frequency correction path, this correction path comprising a low-pass filter (3) the output of which is coupled to at least one threshold correcting circuit (7) comprising selection means for selecting ranges of levels to be corrected and associated amplitude adjustement means, the output of the correction circuit being coupled to the output of the low frequency correction path, the outputs of the wide band path and of the correction path being connected to two corresponding inputs of an output circuit (8) combining the corresponding output signals to form a precorrected signal affected by non-linearities which are complementary to those to be corrected.

2. Device according to claim 1, characterized in that it further comprises a correction path for correcting the components of the highest frequencies of the videofrequency signal and the input of which is connected to an additional output of the distributor, comprising a high-pass filter (32) the output of which is coupled to the signal input of a modulator (92), this correction path further comprising at least one threshold correcting circuit (74) having its input coupled to the output of the low-pass filter (3) of the low frequency path and its output coupled to the modulation input of the modulator (92) the output of which constitutes the output of the high frequency correction path, this output being coupled to an additional input of the output circuit (8).

3. Device according to claim 1, characterized in that it further comprises a correction path for correcting at the middle frequencies of the frequency signal the input of which is connected to an additional output of the distributor, comprising a band-pass filter (31) the output of which is coupled to the signal input of a modulator (91), this correction path further comprising at least one threshold correcting circuit (72) having its input coupled to the output of the low-pass filter (3) of the low frequency path and its output coupled to the modulation input of the modulator (91) the output of which constitutes the output of the middle frequency correction path, this output being coupled to an additional input of the output circuit (8).

4. Device according to claims 1, 2 and 3 in combination, characterized in that the frequency bands of the three correction paths, low, middle and high frequencies, are contiguous to form a universal correction device.

5. Device according to any of the preceding claims, characterized in that each threshold correcting circuit comprises selection means for selecting at least one range of levels to be corrected as determined by thresholds, and associated means for adapting the amplitude of the selected signal and fixing the efficiency of the correction within the corresponding range.

6. Device according to claim 5, characterized in that the selection means comprise adjustement means (P$_1$, P$_2$) for adjusting these thresholds and in that the adjustement means (P$_4$, P$_5$, P$_6$) for adjusting the efficiency of the correction to be applied to the components operate in independent manner within each of the level ranges.

7. Correction device according to any of claims 1 to 6, characterized in that a first correcting circuit (71) selecting the levels to be precorrected by an amplitude expansion and a second correcting circuit (70) selecting the levels to be precorrected by an amplitude compression are associated to each correction path, the low frequency path comprising a non-inverting amplifier (41) and an inverting amplifier (40) connected to the output of the low-pass filter, the outputs of these amplifiers being respectively connected to the inputs of the first and second correction circuits the outputs of which are connected to the inputs of an adder supplying an overall correction signal, the output of the adder being connected to the output of the corresponding correction path.

Fig.1a

Fig.1b

Fig.1c

Fig.2

Fig.3

Fig.4

Fig.5

Fig.6a

Fig.6b

13

Fig.7

Fig.8a

Fig. 8 b

Fig.8c

Fig. 9